# EUROPEAN PATENT SPECIFICATION

(11) **EP 3 136 391 B1**
(45) Date of publication and mention of the grant of the patent: **09.10.2019**
(21) Application number: 16175108.6
(22) Date of filing: 17.06.2016
(51) Int. Cl.: G11B 27/00, G11B 27/034, G11B 27/28, G11B 27/34, H04N 5/783, G06T 7/246

(54) **METHOD, DEVICE AND TERMINAL DEVICE FOR VIDEO EFFECT PROCESSING**
VERFAHREN, VORRICHTUNG UND ENDGERÄTEVORRICHTUNG ZUR VIDEOEFFEKTVERARBEITUNG
PROCÉDÉ, DISPOSITIF ET TERMINAL DE TRAITEMENT D'EFFET VIDÉO

(30) Priority: 28.08.2015 CN 201510541656
(43) Date of publication of application: 01.03.2017
(73) Proprietor: Xiaomi Inc., Beijing 100085 (CN)
(72) Inventor: LIU, Jie, Beijing (CN); WU, Xiaoyong, Beijing (CN); WANG, Wei, Beijing (CN)
(74) Representative: Hughes, Andrea Michelle

(56) References cited:
- EP-A1- 1 331 816
- EP-A2- 0 758 832
- WO-A1-01/13641
- WO-A1-2013/113985
- US-A1- 2015 221 335
- US-B1- 7 003 154
- Live Oak Video: "Slow Motion Video & Fast Forward Video", youtube, 15 May 2015 (2015-05-15), page 1 pp., XP054976791, Retrieved from the Internet: URL:https://www.youtube.com/watch?v=eruX0z Mr3rE [retrieved on 2016-09-22]
- Matthew Mullarkey ET AL: "TO GROW OR NOT TO GROW, THAT IS SLOPRO", , 9 May 2014 (2014-05-09), pages 1-25, XP055304554, Retrieved from the Internet: URL:http://jite.org/documents/DCVol03/v03- 06-SloPro.pdf [retrieved on 2016-09-21]

## Description

### TECHNICAL FIELD

The present disclosure relates to video processing, and more particularly, to a method, a device and a terminal device for video effect processing.

### BACKGROUND

In the related art, in order to add a video effect of fast forward or slow motion, a user needs to install a video edit software in a terminal device, and performs effect processing operations on the video using the video edit software and then saves a new copy of the video. Then, the user may enjoy video effect with fast forward or slow motion video effect by playing the new copy of the video on the terminal device. Video processing techniques are taught in WO 01/13641A1; Live Oak Video: 'Slow Motion Video & Fast Forward Video, youtube, 15 May 2015, XP054976791, URL: https://youtube.com/watch?v=eruX0zMr3rE; and Matthew Mullarkey ET AL: 'TO GROW OR NOT TO GROW, THAT IS SLOPRO', 9 May 2014, pages 1-25, XP055304554, URL://http:jite.org/documents/DCVol03/v03-06-SloPro.pdf from Search Report.

### SUMMARY

In order to solve the problems that exist in the prior art, the present disclosure provides a method, a device and a terminal device for video effect processing, in accordance with claims which follow.

According to a first aspect of embodiments of the present disclosure, there is provided a method for video effect processing as defined in claim 1.

According to a second aspect of embodiments of the present disclosure, there is provided a device for performing such video effect processing and comprising:
a receiving unit, configured to receive a video effect processing instruction; and
a video effect processing unit, configured to perform a fast forward or a slow motion video effect processing on a video that is to be processed according to the video effect processing instruction during the playback of the video that is to be processed.

According to a third aspect of embodiments of the present disclosure, there is provided a computer program which, when being executed on a processor of an apparatus, performs the above method.

The technical scheme according to embodiments of the present disclosure may have the following beneficial effects: a fast forward or slow motion video effect processing is performed on a video that is to be processed during the playback thereof according to the received video effect processing instruction, and the video playback and the video effect processing may be performed simultaneously, which may increase the efficiency of the video effect processing and increase fun in video playback.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for video effect processing according to an exemplary embodiment;
Fig. 2 is a flow chart showing a method for video effect processing according to an exemplary embodiment;
Fig. 3 is a schematic diagram of a user clicking a video effect processing button;
Fig. 4 is a flow chart showing a method for video effect processing according to an exemplary embodiment;
Fig. 5 is a schematic diagram of a user performing a slide operation on the interface for playing the video that is to be processed on a terminal device that is to be processed;
Fig. 6 is a flow chart showing a method for video effect processing according to an exemplary embodiment;
Fig. 7 is a block diagram illustrating a device for video effect processing according to an exemplary embodiment;
Fig. 8 is a block diagram illustrating a device for video effect processing according to an exemplary embodiment;
Fig. 9 is a block diagram illustrating a device for video effect processing according to an exemplary embodiment;
Fig. 10 is a block diagram illustrating a device for video effect processing according to an exemplary embodiment;
Fig. 11 is a block diagram illustrating a device for video effect processing according to an exemplary embodiment; and
Fig. 12 is a block diagram illustrating a terminal device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

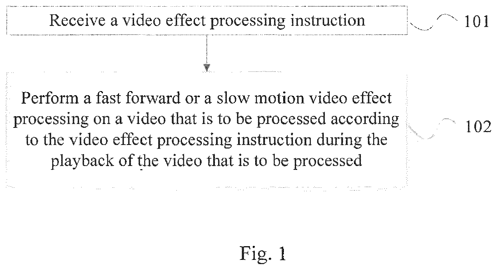

Fig. 1 is a flow chart of a method for video effect processing according to an exemplary embodiment. As illustrated in Fig. 1, the method for video effect processing is applicable in a terminal device such as a smart phone, a computer, a tablet device, a PDA (Personal Digital Assistant) and the like. In detail, the method may be performed by a CPU (Central Processing Unit) or other components with processing function in the above devices, and may include the follow steps.

In step 101, a video effect processing instruction is received.

Generally, while playing a video on the terminal device, the user may be interested in adding video effects to the video for increasing fun. For example, if the video is showing a rabbit running on a grass field, the video will show images of a rabbit running in a normal state; however, if a slow motion may be performed on the part of the rabbit running, every slight movement of the running rabbit may be clearly seen, such that the user watching the video may have a feeling of enjoying a blockbuster movie. For another example, large segments of a surveillance video show a still picture which does not change for a long time. At this time, the user watching the video may be interested in fast forwarding the surveillance video to shorten the watching time of the video. According to the present disclosure, a fast forward or a slow motion video effect may be performed directly while playing the video. Generally, the terminal device decodes and plays the video under a normal speed, while if the user intends to perform a video effect of fast forward or slow motion on the video, a video effect processing function may be initialized in advance of the playing of the video, or video effect processing instruction may be input into the terminal in a interactive way during the playing of the video, and the video effect processing instruction generated by such operations may trigger the terminal device to perform a video effect processing on the video that is to be processed.

In step 102, during the playing of the video that is to be processed, a fast forward or a slow motion video effect processing is performed on the video that is to be processed according to the video effect processing instruction.

According to the triggering of the video effect processing instruction, the terminal device on one hand may initialize the fast forward or the slow motion video effect processing on the video that is to be processed, and on the other hand may acquire instruction information on performing the video effect processing on the video that is to be processed according to the video effect processing instruction. For example, the user may generate the video effect processing instruction by clicking a preset video effect processing button, which may be a virtual button on the touch screen of the smart terminal, or a solid button of the terminal device, and which may include two special buttons for fast forward or slow motion, and may include only one button and generate the video effect processing instruction by various clicking means such as single click or double click. Such a terminal device may perform a video effect processing corresponding to the video effect processing instruction on the video that is to be processed according to the video effect processing instruction.

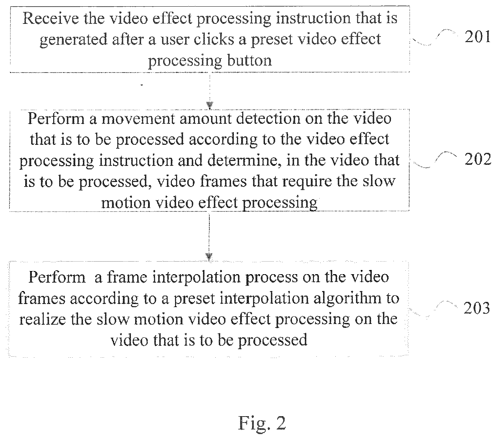

In the method for video effect processing according to the present embodiment, the fast forward or the slow motion video effect processing may be performed during the playback of the video that is to be processed according to the video effect processing instruction, the video playback and the video effect processing may be performed simultaneously, which may increase the efficiency of the video effect processing and may increase fun in video playback. Fig. 2 is a flow chart of a method for video effect processing according to an exemplary embodiment. As illustrated in Fig. 2, the method for video effect processing is applicable in a terminal device such as a smart phone, a computer, a tablet device, a PDA (Personal Digital Assistant) and the like. In detail, the method may be performed by a CPU (Central Processing Unit) or other components with processing function in the above devices, and may include the follow steps.In step 201, a video effect processing instruction is generated after the user clicks the preset video effect processing button, which is configured to trigger the slow motion video effect processing on the video that is to be processed.

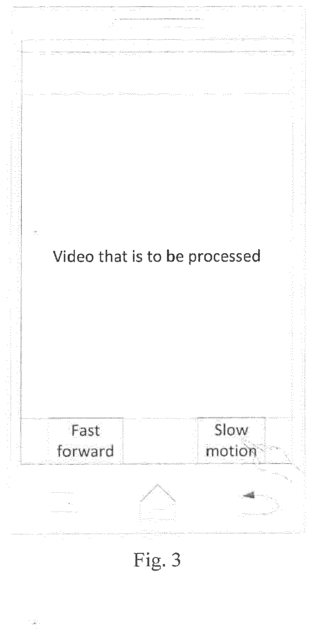

As an example, for adding the slow motion video effect on the video that is to be processed in the present embodiment, the user generates a corresponding video effect processing instruction by clicking the preset video effect processing button before playing the video, so as to trigger the terminal device to perform the slow motion video effect processing during playing the video that is to be processed. The preset video effect processing button may be a virtual button on the touch screen of the smart terminal, or a solid button of the terminal device, and may include two special buttons for fast forward or slow motion, and may include only one button and generate the video effect processing instruction by various clicking means such as single click or double click. After the user performs an operation of clicking the slow motion button or performs the single click or double click operation, the terminal device receives the video effect processing instruction corresponding to the slow motion processing according to the operation. Fig. 3 is a schematic diagram of a user clicking a video effect processing button, as illustrated in Fig. 3, initializing buttons for fast forward and slow motion are provided on the interface for playing the video on the terminal, and during the playback of the video, after the user clicks a corresponding button, the fast forward or slow motion video effect processing is performed automatically on the video that is to be processed according to the method of the present embodiment.

In step 202, a movement amount detection is performed on the video that is to be processed according to the video effect processing instruction and video frames that require the slow motion video effect processing are determined in the video that is to be processed

The terminal device may perform the movement amount detection automatically on the video that is to be processed during the playback thereof according to the above video effect processing instruction. Generally, with respect to fast moving images in a video, the slow motion video effect processing is required to be performed on the video in order for the user to see the movement progress clearly or in order to realize an opposite effect, that is, making playing fast become playing slowly; and with respect to images that are almost still in the video, the fast forward video effect processing is required to shorten the watching time or to prevent impatience of the user. As such, the terminal device may perform the movement amount detection in each frame of the video that is to be processed using an MEMC (Motion Estimate and Motion Compensation) technology, i.e., finding fast moving frames according to the speed of the movement changes of the image content of each frame in the video and determining the frames as video frames that require slow motion video effect processing. The terminal device may: perform the movement amount detection automatically on the video that is to be processed according to the above video effect processing instruction, and acquire a motion vector magnitude values of all preset blocks in each video frame of the video that is to be processed; determine a number of first blocks in each of the video frames, the first block being a preset block having a motion vector magnitude value greater than a motion vector threshold; calculate a first ratio between a number of the first blocks and a number of all the preset blocks in the video frame to which the first blocks belong; judge whether the first ratio is greater than a first preset ratio threshold; and if the first ratio is greater than the first preset ratio threshold, determine that the video frame to which the first blocks belong is a video frame that requires the slow motion video effect processing.

The terminal device acquires the motion vector magnitude values of all preset blocks in each video frame of the video that is to be processed according to the MEMC technology. The video is made up of a plurality of continuous video frames and each video frame may be divided into a plurality of preset blocks. With respect to each preset block, a motion vector magnitude value may be calculated and a motion vector threshold has been preset. It may be determined that the preset blocks corresponding to the motion vector magnitude values greater than the motion vector threshold are the first blocks having an image content of fast moving, and a numeral ratio of the first blocks in the video frame to which the first blocks belong, i.e., a ratio between the number of the first blocks and the number of all the preset blocks in the video frame to which the first blocks belong, is calculated. When the first ratio is greater than a first preset ratio threshold, it indicates that the image of the video frame to which the first blocks belong is in a fast moving state, and thus a slow motion video effect processing is required for the video frame.

In the step 203, a frame interpolation process is performed on the video frames according to a preset interpolation algorithm to realize the slow motion video effect processing on the video that is to be processed.

With the above steps, the terminal device may perform a frame interpolation process on the video frame that requires the slow motion video effect processing according to the MEMC technology, so as to realize the slow motion video effect processing on the video that is to be processed. The preset interpolation algorithm may include a multiple of the interpolation as well as a correspondence between the number of the interpolation and the moving speed in the video frame.

In the method for video effect processing according to the present embodiment, the terminal device may perform the movement amount detection automatically on the video that is to be processed during the playback thereof according to the video effect processing instruction to determine the video frames that require slow motion video effect processing, and perform the frame interpolation process on the video frames, such that the video playback and the slow motion video effect processing may be performed simultaneously, which may increase the efficiency of the video effect processing and may increase fun in video playback.

Further, it may be different from the method embodiment shown in Fig. 2 that: when the terminal device receives a video effect processing instruction generated after the user clicks the fast forward button or performs a single click or double click, the fast forward video effect processing is performed on the video that is to be processed during the playback thereof. The terminal device performs a movement amount detection on the video that is to be processed according to the video effect processing instruction and acquiring motion vector magnitude values of all preset blocks in each video frame of the video that is to be processed; determines a number of second blocks in each of the video frames, the second block being a preset block having a motion vector magnitude value smaller than a motion vector threshold; calculates a second ratio between a number of the second blocks and a number of all the preset blocks in the video frame to which the second blocks belong; judges whether the second ratio is greater than a second preset ratio threshold; if the second ratio is greater than the second preset ratio threshold, determines that the video frame to which the second blocks belong is a video frame that requires the fast forward video effect processing; and performs a frame extraction process on the video frames according to a preset extraction algorithm to realize the fast forward video effect processing on the video that is to be processed.

As described above, the terminal device acquires the motion vector magnitude values of all preset blocks in each video frame of the video that is to be processed according to the MEMC technology. It may be determined that the preset blocks corresponding to the motion vector magnitude values smaller than the motion vector threshold are the second blocks having an image content of slow moving, and a numeral ratio of the second blocks in the video frame to which the second blocks belong, i.e., a ratio between the number of the second blocks and the number of all the preset blocks in the video frame to which the second blocks belong, is calculated. When the second ratio is greater than a second preset ratio threshold, it indicates that the image of the video frame to which the second blocks belong is in a slow moving state, and thus a fast forward video effect processing is required for the video frame. The terminal device may perform a frame extraction process on the video frames that require fast forward video effect processing according to the MEMC technology to realize the fast forward video effect processing on the video that is to be processed. A preset extraction algorithm may include a ratio of the extraction as well as a correspondence between the number of the extraction and the moving speed in the video frame.

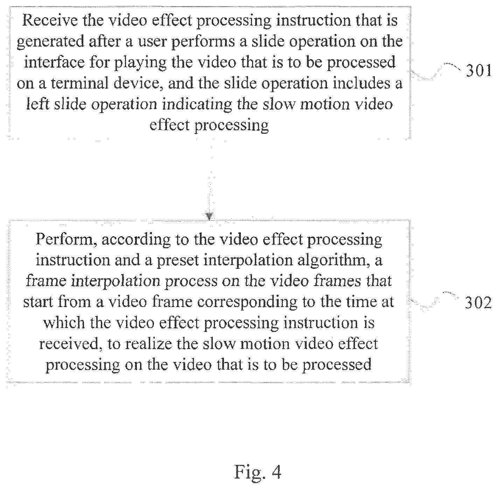

Fig. 4 is a flow chart showing a method for video effect processing according to an exemplary embodiment. As illustrated in Fig. 4, the method for video effect processing is applicable in a terminal device such as a smart phone, a computer, a tablet device, a PDA (Personal Digital Assistant) and the like. In detail, the method may be performed by a CPU (Central Processing Unit) or other components with processing function in the above devices, and may include the follow steps.

In step 301, a video effect processing instruction is generated after the user performs a slide operation on the interface for playing the video that is to be processed on a terminal device that is to be processed, which includes a left slide operation indicating the slow motion video effect processing.

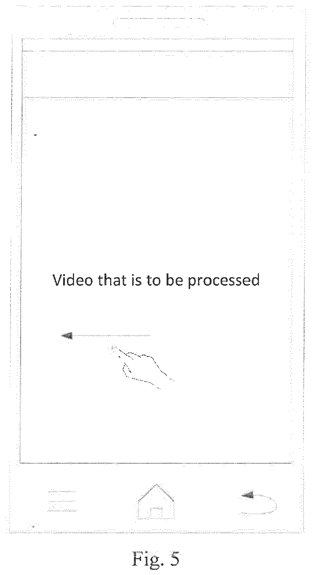

As an example, for adding the slow motion video effect on the video that is to be processed in the present embodiment, the user performs a left slide operation on the interface for playing the video with a finger during the playback of the video. The left slide operation generates a corresponding video effect processing instruction to trigger the terminal device to perform the slow motion video effect processing while playing the video that is to be processed. Fig. 5 is schematic diagram of a user performing a slide operation on the interface for playing the video that is to be processed on a terminal device. As illustrated in Fig. 5, while the terminal is playing the video, the user slides leftward or rightward directly on the play interface with a finger if it is required to add the fast forward or slow motion video effect to the video.

In step 302, according to the video effect processing instruction and a preset interpolation algorithm, a frame interpolation process is performed on the video frames that start from a video frame corresponding to the time at which the video effect processing instruction is received, to realize the slow motion video effect processing on the video that is to be processed.

The terminal device may acquire the video effect processing instruction indicating the slow motion video effect processing by interacting with the user during the playback of the video, then perform the above frame interpolation process on the video frames that start from the video frame corresponding to the time at which the video effect processing instruction is received, such that the slow motion video effect may be added into the video that starts from said video frame. In the present embodiment, it is unnecessary that the terminal device perform actively the movement amount detection on the video that is to be processed; rather, the terminal device performs the corresponding video effect processing on the video that is to be processed after receiving the video effect processing instruction generated by the interaction of the user.

In the method for video effect processing according to the present disclosure, the terminal device performs the slow motion video effect processing according to the video effect processing instruction that is received during the playback of the video, such that the video playback and the video effect processing may be performed simultaneously, which may increase the efficiency of the video effect processing and may increase fun in video playback. Further, it may be different from the method embodiment shown in Fig.4 that: when the terminal device receives a video effect processing instruction generated after the user performs right slide operation on the interface for playing the video that is to be processed on a terminal device, the fast forward video effect processing is performed on the video that is to be processed during the playback thereof. The terminal device performs, according to the video effect processing instruction and a preset extraction algorithm, a frame extraction process on the video frames that start from a video frame corresponding to the time at which the video effect processing instruction is received, to realize the fast forward video effect processing on the video that is to be processed.

The terminal device may acquire the video effect processing instruction indicating the fast forward video effect processing by interacting with the user during the playback of the video, and perform the above frame extraction process on the video frames that start from the video frame corresponding to the time at which the video effect processing instruction is received, such that the fast forward video effect may be added into the video that starts from said video frame. In the present embodiment, it is unnecessary that the terminal device perform actively the movement amount detection on the video that is to be processed; rather, the terminal device performs the corresponding video effect processing on the video that is to be processed after receiving the video effect processing instruction generated by the interaction of the user.

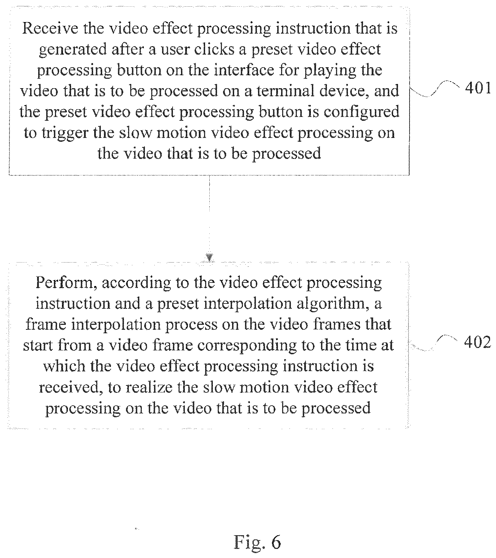

Fig. 6 is a flow chart showing a method for video effect processing according to an exemplary embodiment. As illustrated in Fig. 6, the method for video effect processing is applicable in a terminal device such as a smart phone, a computer, a tablet device, a PDA (Personal Digital Assistant) and the like. In detail, the method may be performed by a CPU (Central Processing Unit) or other components with processing function in the above devices, and may include the follow steps.

In step 401, the video effect processing instruction, that is generated after a user clicks a preset video effect processing button on the interface for playing the video that is to be processed on a terminal device, is received, and the preset video effect processing button is configured to trigger the slow motion video effect processing on the video that is to be processed.

The distinction between the present embodiment and the method embodiment illustrated in Fig. 3 lies in that: the video effect processing instruction received by the terminal device is generated after the user clicks a preset video effect processing button on the interface for playing the video that is to be processed on the terminal device during the layback of the video, and the terminal device is triggered to perform the video effect processing on the video that is to be processed after the user clicks the preset video effect processing button. In the present embodiment, adding slow motion video effect on the video that is to be processed is described, for example.

In the step 402, according to the video effect processing instruction and a preset interpolation algorithm, a frame interpolation process is performed on the video frames that start from a video frame corresponding to the time at which the video effect processing instruction is received, to realize the slow motion video effect processing on the video that is to be processed.

The terminal device may acquire the video effect processing instruction indicating the slow motion video effect processing by interacting with the user during the playback of the video, then perform the above frame interpolation process on the video frames that start from the video frame corresponding to the time at which the video effect processing instruction is received, such that the slow motion video effect may be added into the video that starts from said video frame. In the present embodiment, it is unnecessary that the terminal device perform actively the movement amount detection on the video that is to be processed; rather, the terminal device performs the corresponding video effect processing on the video that is to be processed after receiving the video effect processing instruction generated by the interaction of the user.

The distinction between the present embodiment and the method embodiment illustrated in Fig. 2 lies in that: as illustrated in Fig. 2, before the terminal device plays the video, the user clicks the preset video effect processing button to trigger the terminal device to detect automatically the movement amount of the video during the playback of the video that is to be processed and add fast forward or slow motion video effect process according to the detection result; while in the present embodiment, during the playback of the video, the user clicks the preset video effect processing button to trigger the terminal to perform the fast forward or the slow motion video effect process on the video frames that start from the time at which the video effect processing instruction is received. That is, in the former one, the terminal device performs actively the video effect processing, while in the latter, the terminal triggers the video effect processing by interacting with the user.

In the method for video effect processing according to the present embodiment, the terminal performs the slow motion video effect on the video that is to be processed according to the video effect processing instruction received during the playback of the video, such that the video playback and the video effect processing may be performed simultaneously, which may increase the efficiency of the video effect processing and may increase fun in video playback. Further, it may be different from the method embodiment illustrated in Fig. 6 that: the user clicks the preset video effect processing button to trigger the fast forward video effect processing on the video that is to be processed. At this time, the terminal device performs, according to the video effect processing instruction and a preset extraction algorithm, a frame extraction process on the video frames that start from a video frame corresponding to the time at which the video effect processing instruction is received, to realize the fast forward video effect processing on the video that is to be processed.

The terminal device may acquire the video effect processing instruction indicating the fast forward video effect processing by interacting with the user during the playback of the video, and perform the above frame extraction process on the video frames that start from the video frame corresponding to the time at which the video effect processing instruction is received, such that the fast forward video effect may be added into the video that starts from said video frame. In the present embodiment, it is unnecessary that the terminal device perform actively the movement amount detection on the video that is to be processed; rather, the terminal device performs the corresponding video effect processing on the video that is to be processed after receiving the video effect processing instruction generated by the interaction of the user.

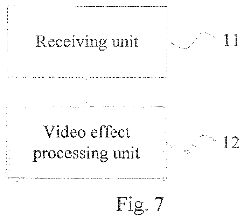

Fig. 7 is a block diagram illustrating a device for video effect processing according to an exemplary embodiment. Referring to Fig. 7, the device includes a receiving unit 11 and a video effect processing unit 12.

The receiving unit 11 is configured to receive a video effect processing instruction.

The video effect processing unit 12 is configured to perform a fast forward or a slow motion video effect processing on a video that is to be processed according to the video effect processing instruction during the playback of the video that is to be processed.

With respect to the devices in the above embodiments, the specific manners for performing operations for individual modules therein have been described in detail in the embodiments regarding the methods, which will not be elaborated herein.

Further, the receiving unit 11 is configured to receive the video effect processing instruction that is generated after a user clicks a preset video effect processing button.

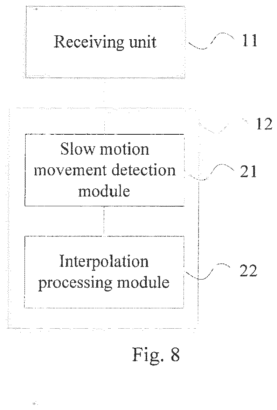

Fig. 8 is a block diagram illustrating a device for video effect processing according to an exemplary embodiment. Referring to Fig. 8, in addition to the block diagram of the device illustrated in Fig. 7, the video effect processing unit 12 further includes a slow motion movement detection module 21 and an interpolation processing module 22. In the present embodiment, the preset video effect processing button is configured to trigger the slow motion video effect processing on the video that is to be processed. The slow motion movement detection module 21 is configured to perform a movement amount detection on the video that is to be processed according to the video effect processing instruction and determine video frames that require the slow motion video effect processing in the video that is to be processed, and the interpolation processing module 22 is configured to perform a frame interpolation process on the video frames according to a preset interpolation algorithm to realize the slow motion video effect processing on the video that is to be processed.

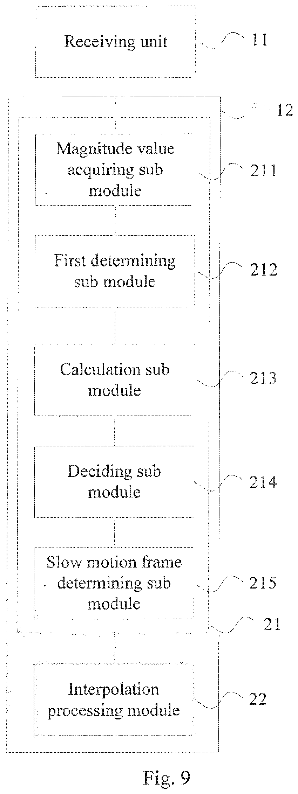

Further, Fig. 9 is a block diagram illustrating a device for video effect processing according to an exemplary embodiment. Referring to Fig. 9, in addition to the block diagram of the device illustrated in Fig. 8, the slow motion movement detection module 21 further includes a magnitude value acquiring sub module 211, a first determining sub module 212, a calculation sub module 213, a deciding sub module 214, and a slow motion frame determining sub module 215. In the present embodiment, the magnitude value acquiring sub module 211 is configured to perform a movement amount detection on the video that is to be processed according to the video effect processing instruction and acquire motion vector magnitude values of all preset blocks in each video frame of the video that is to be processed; the first determining sub module 212 is configured to determine a first ratio between a number of the first blocks and a number of all the preset blocks in the video frame to which the first blocks belong; the calculation sub module 213 is configured to calculate a first ratio between a number of the first blocks and a number of all the preset blocks in the video frame to which the first blocks belong; the deciding sub module 214 is configured to judge whether the first ratio is greater than a first preset ratio threshold; and the slow motion frame determining sub module 215 is configured to determine that the video frame to which the first blocks belong is a video frame that requires the slow motion video effect processing if the first ratio is greater than the first preset ratio threshold.

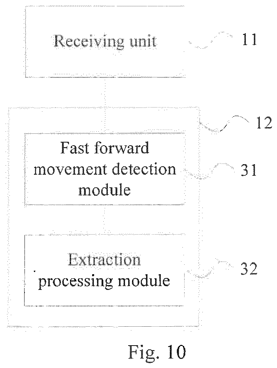

Fig. 10 is a block diagram illustrating a device for video effect processing according to an exemplary embodiment. Referring to Fig. 10, in addition to the block diagram of the device illustrated in Fig. 7, the video effect processing unit 12 further includes a fast forward movement detection module 31 and an extraction processing module 32. In the present embodiment, the preset video effect processing button is configured to trigger the fast forward video effect processing on the video that is to be processed. The fast forward movement detection module 31 is configured to perform a movement amount detection on the video that is to be processed according to the video effect processing instruction and determining, in the video that is to be processed, video frames that require the fast forward video effect processing; and the extraction processing module is configured to perform a frame extraction process on the video frames according to a preset extraction algorithm to realize the fast forward video effect processing on the video that is to be processed.

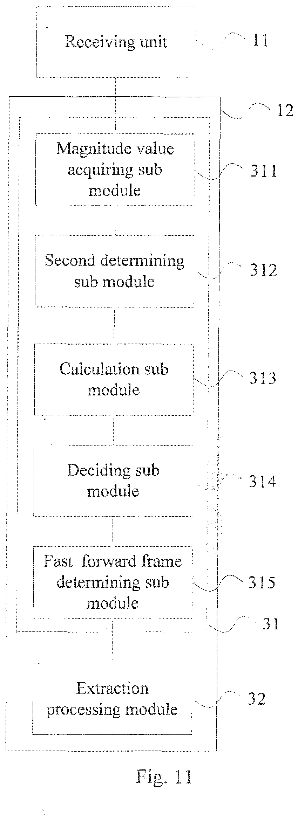

Further, Fig. 11 is a block diagram illustrating a device for video effect processing according to an exemplary embodiment. Referring to Fig. 11, in addition to the block diagram of the device illustrated in Fig. 10, the fast forward movement detection module 31 further includes a magnitude value acquiring sub module 311, a second determining sub module 312, a calculation sub module 313, a deciding sub module 314 and a fast forward frame determining sub module 315. In the present embodiment, the magnitude value acquiring sub module 311 is configured to perform a movement amount detection on the video that is to be processed according to the video effect processing instruction and acquiring motion vector magnitude values of all preset blocks in each video frame of the video that is to be processed; the second determining sub module 312 is configured to determine a number of second blocks in each of the video frames, the second block being a preset block having a motion vector magnitude value smaller than a motion vector threshold; the calculation sub module 313 is configured to calculate a second ratio between a number of the second blocks and a number of all the preset blocks in the video frame to which the second blocks belong; the deciding sub module 314 is configured to judge the second ratio is greater than a second preset ratio threshold; and the fast forward frame determining sub module 315 is configured to determine that the video frame to which the second blocks belong is a video frame that requires the fast forward video effect processing if the second ratio is greater than the second preset ratio threshold.

With respect to the devices in the above embodiments, the specific manners for performing operations for individual modules therein have been described in detail in the embodiments regarding the methods, which will not be elaborated herein.

Further, the receiving unit 11 is configured to receive the video effect processing instruction that is generated after a user performs a slide operation on the interface for playing the video that is to be processed on a terminal device.

The slide operation includes a left slide operation indicating the slow motion video effect processing, and the video effect processing unit 12 is configured to perform, according to the video effect processing instruction and a preset interpolation algorithm, a frame interpolation process on the video frames that start from a video frame corresponding to the time at which the video effect processing instruction is received, to realize the slow motion effect processing on the video that is to be processed.

The slide operation includes a right slide operation indicating the fast forward effect processing, and the video effect processing unit 12 is configured to perform, according to the video effect processing instruction and a preset extraction algorithm, a frame extraction process on the video frames that start from a video frame corresponding to the time at which the video effect processing instruction is received, to realize the fast forward effect processing on the video that is to be processed.

Further, the receiving unit 11 is configured to receive the video effect processing instruction that is generated after a user clicks a preset video effect processing button on the interface for playing the video that is to be processed on a terminal device.

The preset video effect processing button is configured to trigger the slow motion video effect processing on the video that is to be processed, and the video effect processing unit 12 is configured to perform, according to the video effect processing instruction and a preset interpolation algorithm, a frame interpolation process on the video frames that start from a video frame corresponding to the time at which the video effect processing instruction is received, to realize the slow motion video effect processing on the video that is to be processed.

The preset video effect processing button is configured to trigger the fast forward video effect processing on the video that is to be processed, and the video effect processing unit 12 is configured to perform, according to the video effect processing instruction and a preset extraction algorithm, a frame extraction process on the video frames that start from a video frame corresponding to the time at which the video effect processing instruction is received, to realize the fast forward video effect processing on the video that is to be processed.

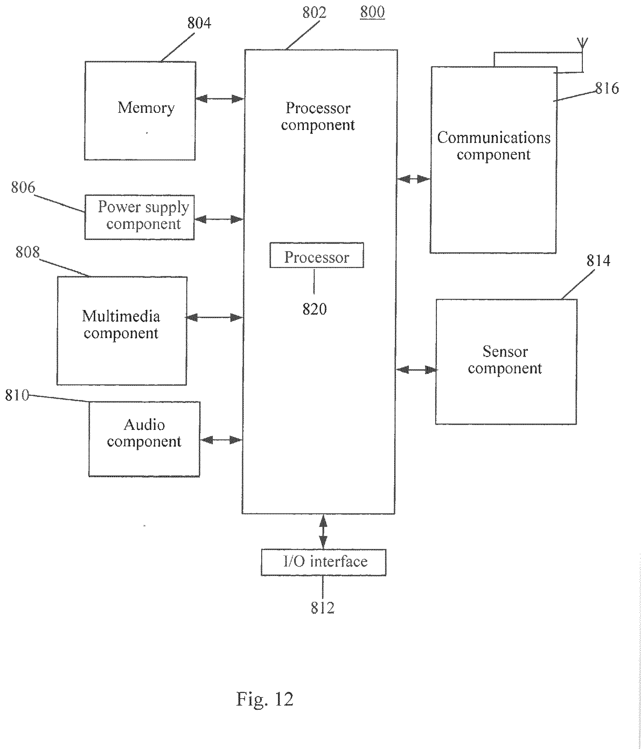

Fig. 12 is a block diagram of a terminal device according to an exemplary embodiment. For example, the terminal device 800 may be a smart phone, a computer, a tablet device, a PDA (Personal Digital Assistant) and the like.

Referring to Fig. 12, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, video, etc. The memory 804 may be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The power component 806 provides power to various components of the terminal device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals. The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS (Complementary Metal Oxide Semiconductor) or CCD (Charge-coupled Device) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi (WIreless-Fidelity), 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal device 800, for performing the above-described methods. For example, the non-transitory computer-readable storage medium may be a ROM, a RAM (Random Access Memory), a CD-ROM (Compact Disc Read-Only Memory), a magnetic tape, a floppy disc, an optical data storage device, and the like.

A non-transitory computer-readable storage medium, when instructions in the storage medium is executed by the processor of a mobile terminal, enables the mobile terminal to perform the method for video effect processing that includes: receiving a video effect processing instruction; and performing a fast forward or a slow motion video effect processing on the video that is to be processed according to the video effect processing instruction during the playback of a video that is to be processed.

## Claims

1. A method for video effect processing, **characterized in** comprising:
receiving (101) a video effect processing instruction generated due to a user interaction during the playback of a video that is to be processed; and
performing (102) a fast forward or a slow motion video effect processing on the video that is to be processed according to the video effect processing instruction during the playback of the video that is to be processed; and wherein
the preset video effect processing instruction is configured to trigger the fast forward or slow motion video effect processing on the video that is to be processed; and **characterized in that**
performing a slow motion video effect processing on the video that is to be processed according to the video effect processing instruction comprises:
performing (202) a movement amount detection on the video that is to be processed according to the video effect processing instruction and determining, in the video that is to be processed, video frames that require the slow motion video effect processing; and
performing (203) a frame interpolation process on the video frames according to a preset interpolation algorithm to realize the slow motion video effect processing on the video that is to be processed; wherein
the performing a movement amount detection on the video that is to be processed according to the video effect processing instruction and determining video frames that require the slow motion video effect processing in the video that is to be processed comprising:
performing a movement amount detection on the video that is to be processed according to the video effect processing instruction and acquiring motion vector magnitude values of all preset blocks in each video frame of the video that is to be processed;
determining a number of first blocks in each of the video frames, the first block being a preset block having a motion vector magnitude value greater than a motion vector threshold;
calculating a first ratio between the number of the first blocks and a number of all the preset blocks in the video frame to which the first blocks belong;
deciding whether the first ratio is greater than a first preset ratio threshold; and
if the first ratio is greater than the first preset ratio threshold, determining that the video frame to which the first blocks belong is a video frame that requires the slow motion video effect processing; and
wherein performing a fast forward video effect processing on the video that is to be processed according to the video effect processing instruction comprises:
performing a movement amount detection on the video that is to be processed according to the video effect processing instruction and determining, in the video that is to be processed, video frames that require the fast forward video effect processing; and
performing a frame extraction process on the video frames according to a preset extraction algorithm to realize the fast forward video effect processing on the video that is to be processed; wherein
the performing a movement amount detection on the video that is to be processed according to the video effect processing instruction and determining, in the video that is to be processed, video frames that require the fast forward video effect processing comprising:
performing a movement amount detection on the video that is to be processed according to the video effect processing instruction and acquiring motion vector magnitude values of all preset blocks in each video frame of the video that is to be processed;
determining a number of second blocks in each of the video frames, the second block being a preset block having a motion vector magnitude value smaller than a motion vector threshold;
calculating a second ratio between a number of the second blocks and a number of all the preset blocks in the video frame to which the second blocks belong;
deciding whether the second ratio is greater than a second preset ratio threshold; and
if the second ratio is greater than the second preset ratio threshold, determining that the video frame to which the second blocks belong is a video frame that requires the fast forward video effect processing.

2. The method according to claim 1, wherein the receiving a video effect processing instruction comprises:
receiving the video effect processing instruction that is generated due to a user performing a slide operation on the interface for playing the video that is to be processed on a terminal device.

3. The method according to claim 2, wherein the slide operation comprises a left slide operation indicating the slow motion video effect processing, and the performing a slow motion video effect processing on the video that is to be processed according to the video effect processing instruction comprises:
performing (302), according to the video effect processing instruction and a preset interpolation algorithm, the frame interpolation process on the video frames that start from a video frame corresponding to the time at which the video effect processing instruction is received, to realize the slow motion video effect processing on the video that is to be processed.

4. The method according to claim 2, wherein the slide operation comprises a right slide operation indicating the fast forward video effect processing, and the performing a fast forward video effect processing on the video that is to be processed according to the video effect processing instruction comprises:
performing, according to the video effect processing instruction and a preset extraction algorithm, the frame extraction process on the video frames that start from a video frame corresponding to the time at which the video effect processing instruction is received, to realize the fast forward video effect processing on the video that is to be processed.

5. The method according to claim 1, wherein the receiving a video effect processing instruction comprises:
receiving the video effect processing instruction that is generated due to a user clicking a preset video effect processing button on the interface for playing the video that is to be processed on a terminal device.

6. The method according to claim 5, wherein the preset video effect processing button is configured to trigger the slow motion video effect processing on the video that is to be processed, and the performing a slow motion video effect processing on the video that is to be processed according to the video effect processing instruction comprises:
performing (402), according to the video effect processing instruction and a preset interpolation algorithm, the frame interpolation process on the video frames that start from a video frame corresponding to the time at which the video effect processing instruction is received, to realize the slow motion video effect processing on the video that is to be processed.

7. The method according to claim 5, wherein the preset video effect processing button is configured to trigger the fast forward video effect processing on the video that is to be processed, and the performing a fast forward video effect processing on the video that is to be processed according to the video effect processing instruction comprises:
performing, according to the video effect processing instruction and a preset extraction algorithm, the frame extraction process on the video frames that start from a video frame corresponding to the time at which the video effect processing instruction is received, to realize the fast forward video effect processing on the video that is to be processed.

8. A device for video effect processing according to the method of any preceeding claims, **characterized in** comprising:
a receiving unit (11), configured to receive the video effect processing instruction; and
a video effect processing unit (12), configured to perform the fast forward or slow motion video effect processing.

9. A computer program which, when being executed on a processor of a terminal device, performs the method according to any one of claims 1-7.

## Patentansprüche

1. Verfahren zur Videoeffektbearbeitung, **gekennzeichnet durch** umfassend:
Empfangen (101) einer Videoeffektbearbeitungsanweisung, die aufgrund einer Benutzerinteraktion während des Abspielens eines zu bearbeitenden Videos erzeugt wird;
Durchführen (102) einer Schnellvorlauf- oder Zeitlupenvideoeffektbearbeitung an dem zu bearbeitenden Video gemäß der Videoeffektbearbeitungsanweisung während des Abspielens des zu bearbeitenden Videos; und wobei
die voreingestellte Videoeffektbearbeitungsanweisung konfiguriert ist, die Schnellvorlauf- oder Zeitlupenvideoeffektbearbeitung an dem zu bearbeitenden Video auszulösen; und
**dadurch gekennzeichnet, dass**
Durchführen einer Zeitlupenvideoeffektbearbeitung an dem gemäß der Videoeffektbearbeitungsanweisung zu bearbeitenden Video umfasst:
Durchführen (202) einer Bewegungsausmaßdetektion an dem gemäß der Videoeffektbearbeitungsanweisung zu bearbeitenden Video und Bestimmen von Videoeinzelbildern in dem zu bearbeitenden Video, die die Zeitlupenvideoeffektbearbeitung benötigen; und
Durchführen (203) eines Einzelbildinterpolationsprozesses an den Videoeinzelbildern gemäß einem voreingestellten Interpolationsalgorithmus, um die Zeitlupenvideoeffektbearbeitung an dem zu bearbeitenden Video zu verwirklichen; wobei
das Durchführen einer Bewegungsausmaßdetektion an dem gemäß der Videoeffektbearbeitungsanweisung zu bearbeitenden Video und Bestimmen von Videoeinzelbildern, die die Zeitlupenvideoeffektbearbeitung in dem zu bearbeitenden Video benötigen, umfasst:
Durchführen einer Bewegungsausmaßdetektion an dem gemäß der Videoeffektbearbeitungsanweisung zu bearbeitenden Video und Erlangen von Bewegungsvektorgrößenordnungswerten aller voreingestellten Blöcke in jedem Videoeinzelbild des zu bearbeitenden Videos;
Bestimmen einer Anzahl erster Blöcke in jedem der Videoeinzelbilder, wobei der erste Block ein voreingestellter Block mit einem Bewegungsvektorgrößenordnungswert größer als ein Bewegungsvektorschwellenwert ist;
Berechnen eines ersten Verhältnisses zwischen der Anzahl der ersten Blöcke und einer Anzahl aller voreingestellten Blöcke im Videoeinzelbild, zu dem die ersten Blöcke gehören;
Entscheiden, ob das erste Verhältnis größer als ein erster voreingestellter Verhältnisschwellenwert ist; und
falls das erste Verhältnis größer als der erste voreingestellte Verhältnisschwellenwert ist, Bestimmen, dass das Videoeinzelbild, zu dem die ersten Blöcke gehören, ein Videoeinzelbild ist, das die Zeitlupenvideoeffektbearbeitung benötigt; und
wobei Durchführen einer Schnellvorlaufvideoeffektbearbeitung an dem gemäß der Videoeffektbearbeitungsanweisung zu bearbeitenden Video umfasst:
Durchführen einer Bewegungsausmaßdetektion an dem gemäß der Videoeffektbearbeitungsanweisung zu bearbeitenden Video und Bestimmen, in dem zu bearbeitenden Video, von Videoeinzelbildern, die die Schnellvorlaufvideoeffektbearbeitung benötigen; und
Durchführen eines Einzelbildextraktionsprozesses an den Videoeinzelbildern gemäß einem voreingestellten Extraktionsalgorithmus, um die Schnellvorlaufvideoeffektbearbeitung an dem zu bearbeitenden Video zu verwirklichen; wobei
das Durchführen einer Bewegungsausmaßdetektion an dem gemäß der Videoeffektbearbeitungsanweisung zu bearbeitenden Video und Bestimmen von Videoeinzelbildern in dem zu bearbeitenden Video, die die Schnellvorlaufvideoeffektbearbeitung benötigen, umfasst:
Durchführen einer Bewegungsausmaßdetektion an dem gemäß der Videoeffektbearbeitungsanweisung zu bearbeitenden Video und Erlangen von Bewegungsvektorgrößenordnungswerten aller voreingestellten Blöcke in jedem Videoeinzelbild des zu bearbeitenden Videos;
Bestimmen einer Anzahl zweiter Blöcke in jedem der Videoeinzelbilder, wobei der zweite Block ein voreingestellter Block mit einem Bewegungsvektorgrößenordnungswert ist, der kleiner als ein Bewegungsvektorschwellenwert ist;
Berechnen eines zweiten Verhältnisses zwischen einer Anzahl der zweiten Blöcke und einer Anzahl aller voreingestellten Blöcke in dem Videoeinzelbild, zu dem die zweiten Blöcke gehören;
Entscheiden, ob das zweite Verhältnis größer als ein zweiter voreingestellter Verhältnisschwellenwert ist; und
falls das zweite Verhältnis größer als der zweite voreingestellte Verhältnisschwellenwert ist, Bestimmen, dass das Videoeinzelbild, zu dem die zweiten Blöcke gehören, ein Videoeinzelbild ist, das die Schnellvorlaufvideoeffektbearbeitung benötigt.

2. Verfahren nach Anspruch 1, wobei das Empfangen einer Videoeffektbearbeitungsanweisung umfasst:
Empfangen der Videoeffektbearbeitungsanweisung, die erzeugt wird, weil ein Benutzer einen Schiebevorgang an der Schnittstelle zum Abspielen des zu bearbeitenden Videos auf einem Endgerät durchführt.

3. Verfahren nach Anspruch 2, wobei der Schiebevorgang einen Schiebevorgang nach links umfasst, der die Zeitlupenvideoeffektbearbeitung angibt, und das Durchführen einer Zeitlupenvideoeffektbearbeitung an dem gemäß der Videoeffektbearbeitungsanweisung zu bearbeitenden Video umfasst:
Durchführen (302), gemäß der Videoeffektbearbeitungsanweisung und einem voreingestellten Interpolationsalgorithmus, des Einzelbildinterpolationsprozesses an den Videoeinzelbildern, die ab einem Videoeinzelbild starten, das dem Zeitpunkt entspricht, zu dem die Videoeffektbearbeitungsanweisung empfangen wird, um die Zeitlupenvideoeffektbearbeitung an dem zu bearbeitenden Video zu verwirklichen.

4. Verfahren nach Anspruch 2, wobei der Schiebevorgang einen Schiebevorgang nach rechts umfasst, der die Schnellvorlaufvideoeffektbearbeitung angibt, und das Durchführen einer Schnellvorlaufvideoeffektbearbeitung an dem gemäß der Videoeffektbearbeitungsanweisung zu bearbeitenden Video umfasst:
Durchführen, gemäß der Videoeffektbearbeitungsanweisung und einem voreingestellten Extraktionsalgorithmus, des Einzelbildextraktionsprozesses an den Videoeinzelbildern, die ab einem Videoeinzelbild starten, das dem Zeitpunkt entspricht, zu dem die Videoeffektbearbeitungsanweisung empfangen wird, um die Schnellvorlaufvideoeffektbearbeitung an dem zu bearbeitenden Video zu verwirklichen.

5. Verfahren nach Anspruch 1, wobei das Empfangen einer Videoeffektbearbeitungsanweisung umfasst:
Empfangen der Videoeffektbearbeitungsanweisung, die erzeugt wird, weil ein Benutzer auf eine voreingestellte Videoeffektbearbeitungsschaltfläche an der Schnittstelle zum Abspielen des zu bearbeitenden Videos auf einem Endgerät drückt.

6. Verfahren nach Anspruch 5, wobei die voreingestellte Videoeffektbearbeitungsschaltfläche konfiguriert ist, um die Zeitlupenvideoeffektbearbeitung an dem zu bearbeitenden Video auszulösen, und das Durchführen einer Zeitlupenvideoeffektbearbeitung an dem gemäß der Videoeffektbearbeitungsanweisung zu bearbeitenden Video umfasst:
Durchführen (402), gemäß der Videoeffektbearbeitungsanweisung und einem voreingestellten Interpolationsalgorithmus, des Einzelbildinterpolationsprozesses an den Videoeinzelbildern, die ab einem Videoeinzelbild starten, das dem Zeitpunkt entspricht, zu dem die Videoeffektbearbeitungsanweisung empfangen wird, um die Zeitlupenvideoeffektbearbeitung an dem zu bearbeitenden Video zu verwirklichen.

7. Verfahren nach Anspruch 5, wobei die voreingestellte Videoeffektbearbeitungsschaltfläche konfiguriert ist, um die Vorlaufvideoeffektbearbeitung an dem zu bearbeitenden Video auszulösen, und das Durchführen einer Schnellvorlaufvideoeffektbearbeitung an dem gemäß der Videoeffektbearbeitungsanweisung zu bearbeitenden Video umfasst:
Durchführen, gemäß der Videoeffektbearbeitungsanweisung und einem voreingestellten Extraktionsalgorithmus, des Einzelbildextraktionsprozesses an den Videoeinzelbildern, die ab einem Videoeinzelbild starten, das dem Zeitpunkt entspricht, zu dem die Videoeffektbearbeitungsanweisung empfangen wird, um die Vorlaufvideoeffektbearbeitung an dem zu bearbeitenden Video zu verwirklichen.

8. Vorrichtung für eine Videoeffektbearbeitung gemäß dem Verfahren nach einem der vorstehenden Ansprüche, **gekennzeichnet durch** Umfassen:
einer Empfangseinheit (11), die zum Empfangen der Videoeffektbearbeitungsanweisung konfiguriert ist; und
einer Videoeffektbearbeitungseinheit (12), die zum Durchführen der Schnellvorlauf- oder Zeitlupenvideoeffektbearbeitung konfiguriert ist.

9. Computerprogramm, das, wenn es auf einem Prozessor eines Endgeräts ausgeführt wird, das Verfahren nach einem der Ansprüche 1-7 durchführt.

## Revendications

1. Procédé de traitement d'effet vidéo, **caractérisé en ce qu'**il comprend :
la réception (101) d'une instruction de traitement d'effet vidéo générée à cause d'une interaction d'utilisateur durant la lecture d'une vidéo qui doit être traitée ; et
l'exécution (102) d'un traitement d'effet vidéo d'avance rapide ou de ralenti sur la vidéo qui doit être traitée en fonction de l'instruction de traitement d'effet vidéo durant la lecture de la vidéo qui doit être traitée ; et dans lequel
l'instruction de traitement d'effet vidéo prédéfinie est configurée pour déclencher le traitement d'effet vidéo d'avance rapide ou de ralenti sur la vidéo qui doit être traitée ; et **caractérisé en ce que**
l'exécution d'un traitement d'effet vidéo de ralenti sur la vidéo qui doit être traitée en fonction de l'instruction de traitement d'effet vidéo comprend :
l'exécution (202) d'une détection de quantité de mouvement sur la vidéo qui doit être traitée en fonction de l'instruction de traitement d'effet vidéo et la détermination, dans la vidéo qui doit être traitée, de trames vidéo qui nécessitent le traitement d'effet vidéo de ralenti ; et
l'exécution (203) d'un processus d'interpolation de trame sur les trames vidéo en fonction d'un algorithme d'interpolation prédéfini pour réaliser le traitement d'effet vidéo de ralenti sur la vidéo qui doit être traitée ; dans lequel
l'exécution d'une détection de quantité de mouvement sur la vidéo qui doit être traitée en fonction de l'instruction de traitement d'effet vidéo et la détermination de trames vidéo qui nécessitent le traitement d'effet vidéo de ralenti dans la vidéo qui doit être traitée comprenant :
l'exécution d'une détection de quantité de mouvement sur la vidéo qui doit être traitée en fonction de l'instruction de traitement d'effet vidéo et l'acquisition de valeurs de grandeur de vecteur de mouvement de tous les blocs prédéfinis dans chaque trame vidéo de la vidéo qui doit être traitée ;
la détermination d'un nombre de premiers blocs dans chacune des trames vidéo, le premier bloc étant un bloc prédéfini ayant une valeur de grandeur de vecteur de mouvement supérieure à un seuil de vecteur de mouvement ;
le calcul d'un premier rapport entre le nombre de premiers blocs et un nombre de tous les blocs prédéfinis dans la trame vidéo à laquelle les premiers blocs appartiennent ;
le fait de décider si le premier rapport est supérieur à un premier seuil de rapport prédéfini ; et
si le premier rapport est supérieur au premier seuil de rapport prédéfini, la détermination que la trame vidéo à laquelle les premiers blocs appartiennent est une trame vidéo qui nécessite le traitement d'effet vidéo de ralenti ; et
dans lequel l'exécution d'un traitement d'effet vidéo d'avance rapide sur la vidéo qui doit être traitée en fonction de l'instruction de traitement d'effet vidéo comprend :
l'exécution d'une détection de quantité de mouvement sur la vidéo qui doit être traitée en fonction de l'instruction de traitement d'effet vidéo et la détermination, dans la vidéo qui doit être traitée, de trames vidéo qui nécessitent le traitement d'effet vidéo d'avance rapide ; et
l'exécution d'un processus d'extraction de trame sur les trames vidéo en fonction d'un algorithme d'extraction prédéfini pour réaliser le traitement d'effet vidéo d'avance rapide sur la vidéo qui doit être traitée ; dans lequel
l'exécution d'une détection de quantité de mouvement sur la vidéo qui doit être traitée en fonction de l'instruction de traitement d'effet vidéo et la détermination, dans la vidéo qui doit être traitée, de trames vidéo qui nécessitent le traitement d'effet vidéo d'avance rapide comprenant :
l'exécution d'une détection de quantité de mouvement sur la vidéo qui doit être traitée en fonction de l'instruction de traitement d'effet vidéo et l'acquisition de valeurs de grandeur de vecteur de mouvement de tous les blocs prédéfinis dans chaque trame vidéo de la vidéo qui doit être traitée ;
la détermination d'un nombre de deuxièmes blocs dans chacune des trames vidéo, le deuxième bloc étant un bloc prédéfini ayant une valeur de grandeur de vecteur de mouvement inférieure à un seuil de vecteur de mouvement ;
le calcul d'un deuxième rapport entre un nombre des deuxièmes blocs et un nombre de tous les blocs prédéfinis dans la trame vidéo à laquelle les deuxièmes blocs appartiennent ;
le fait de décider si le deuxième rapport est supérieur à un deuxième seuil de rapport prédéfini ; et
si le deuxième rapport est supérieur au deuxième seuil de rapport prédéfini, la détermination que la trame vidéo à laquelle les deuxièmes blocs appartiennent est une trame vidéo qui nécessite le traitement d'effet vidéo d'avance rapide.

2. Procédé selon la revendication 1, dans lequel la réception d'une instruction de traitement d'effet vidéo comprend :
la réception de l'instruction de traitement d'effet vidéo qui est générée à cause d'un utilisateur effectuant une opération de glissement sur l'interface pour lire la vidéo qui doit être traitée sur un dispositif terminal.

3. Procédé selon la revendication 2, dans lequel l'opération de glissement comprend une opération de glissement à gauche indiquant le traitement d'effet vidéo de ralenti, et l'exécution d'un traitement d'effet vidéo de ralenti sur la vidéo qui doit être traitée en fonction de l'instruction de traitement d'effet vidéo comprend :
l'exécution (302), en fonction de l'instruction de traitement d'effet vidéo et d'un algorithme d'interpolation prédéfini, du processus d'interpolation de trame sur les trames vidéo qui démarrent à partir d'une trame vidéo correspondant au temps auquel l'instruction de traitement d'effet vidéo est reçue, pour réaliser le traitement d'effet vidéo de ralenti sur la vidéo qui doit être traitée.

4. Procédé selon la revendication 2, dans lequel l'opération de glissement comprend une opération de glissement à droite indiquant le traitement d'effet vidéo d'avance rapide, et l'exécution d'un traitement d'effet d'avance rapide sur la vidéo qui doit être traitée en fonction de l'instruction de traitement d'effet vidéo comprend :
l'exécution, en fonction de l'instruction de traitement d'effet vidéo et d'un algorithme d'extraction prédéfini, du processus d'extraction de trame sur les trames vidéo qui démarrent à partir d'une trame vidéo correspondant au temps auquel l'instruction de traitement d'effet vidéo est reçue, pour réaliser le traitement d'effet vidéo d'avance rapide sur la vidéo qui doit être traitée.

5. Procédé selon la revendication 1, dans lequel la réception d'une instruction de traitement d'effet vidéo comprend :
la réception de l'instruction de traitement d'effet vidéo qui est générée à cause d'un utilisateur cliquant sur un bouton de traitement d'effet vidéo prédéfini sur l'interface pour lire la vidéo qui doit être traitée sur un dispositif terminal.

6. Procédé selon la revendication 5, dans lequel le bouton de traitement d'effet vidéo prédéfini est configuré pour déclencher le traitement d'effet vidéo de ralenti sur la vidéo qui doit être traitée, et l'exécution d'un traitement d'effet vidéo de ralenti sur la vidéo qui doit être traitée en fonction de l'instruction de traitement d'effet vidéo comprend :
l'exécution (402), en fonction de l'instruction de traitement d'effet vidéo et d'un algorithme d'interpolation prédéfini, du processus d'interpolation de trame sur les trames vidéo qui démarrent à partir d'une trame vidéo correspondant au temps auquel l'instruction de traitement d'effet vidéo est reçue, pour réaliser le traitement d'effet vidéo de ralenti sur la vidéo qui doit être traitée.

7. Procédé selon la revendication 5, dans lequel le bouton de traitement d'effet vidéo prédéfini est configuré pour déclencher le traitement d'effet vidéo d'avance rapide sur la vidéo qui doit être traitée, et l'exécution d'un traitement d'effet vidéo d'avance rapide sur la vidéo qui doit être traitée en fonction de l'instruction de traitement d'effet vidéo comprend :
l'exécution, en fonction de l'instruction de traitement d'effet vidéo et d'un algorithme d'extraction prédéfini, du processus d'extraction de trame sur les trames vidéo qui démarrent à partir d'une trame vidéo correspondant au temps auquel l'instruction de traitement d'effet vidéo est reçue, pour réaliser le traitement d'effet vidéo d'avance rapide sur la vidéo qui doit être traitée.

8. Dispositif de traitement d'effet vidéo selon le procédé selon l'une quelconque des revendications précédentes, **caractérisé en ce qu'**il comprend :
une unité de réception (11) configurée pour recevoir l'instruction de traitement d'effet vidéo ; et
une unité de traitement d'effet vidéo (12) configurée pour effectuer le traitement d'effet vidéo d'avance rapide ou de ralenti.

9. Programme informatique qui, quand il est exécuté sur un processeur d'un dispositif terminal, réalise le procédé selon l'une quelconque des revendications 1 à 7.
